Europäisches Patentamt

European Patent Office

Office européen des brevets

(11) Publication number: **0 308 595 B1**

# EUROPEAN PATENT SPECIFICATION

(45) Date of publication of patent specification: **03.06.92**    (51) Int. Cl.⁵: **B66F 11/04**

(21) Application number: **88111045.6**

(22) Date of filing: **11.07.88**

(54) **A vehicular low profile self propelled aerial work platform.**

(30) Priority: **25.09.87 US 101016**

(43) Date of publication of application:
**29.03.89 Bulletin  89/13**

(45) Publication of the grant of the patent:
**03.06.92 Bulletin  92/23**

(84) Designated Contracting States:
**CH DE ES FR GB IT LI NL SE**

(56) References cited:
FR-A- 2 230 537          GB-A- 1 412 558
GB-A- 2 007 402          GB-A- 2 043 026
US-A- 3 483 948          US-A- 3 575 262
US-A- 3 836 025          US-A- 4 000 787
US-A- 4 280 589

(73) Proprietor: **KIDDE INDUSTRIES INC.**
**100 Wood Avenue South**
**Iselin, New Jersey 08830(US)**

(72) Inventor: **Hade, Donald C. Jr.**
**7721 Anthony Highway**
**Waynesboro, Pennsylvania 17268(US)**
Inventor: **Backer, Robert D.**
**P.O. Box 217**
**Rouzerville, Pennsylvania 17250(US)**

(74) Representative: **Keller, René, Dr. et al**
**Postfach 12**
**CH-3000 Bern 7(CH)**

Rank Xerox (UK) Business Services

## Description

Various vehicular self propelled aerial work platforms have been proposed wherein a pedestal or housing is mounted on a turntable carried by a vehicle. A boom assembly, having a work platform mounted on its outer end, is either pivotally connected directly to the pedestal or through suitable linkage. While these known mobile aerial work platforms have been generally satisfactory for their intended purpose, they have been characterized by their size and reach capabilities thereby precluding their use in relatively small work areas, such as, in warehouses and manufacturing plants having low and narrow doorways and narrow aisles, but requiring high working heights.

US-A 4,280,589 discloses a mobile aerial work platform with a superstructure support frame mounted on a turntable on a wheeled chassis with a pair of parallel arms pivotally connected at one end to opposite sides of an upright post connected to the superstructure support frame. The opposite ends of the parallel arms are connected to opposite sides of a second post member that is skewed along its length with a telescoping arm pivotally connected to the top thereof in a vertical plane transversely spaced from the plane of the parallel arms, so that, when the hydraulic lift cylinders connected for moving the telescoping arm and parallel arms, respectively, in vertical planes are retracted to lower the structure to a stowed position, the telescoping arm moves and lies freely alongside the parallel arms.

Furthermore, the preamble of claim 1 is based onto this US-document.

After considerable research and experimentation, the vehicular self propelled work platform of the present invention has been devised having a low profile and a narrow width so that it can be maneuvered through low and narrow doorways and aisles in warehouses and manufacturing plants. The vehicular low profile self propelled aerial work platform of the present invention comprises, essentially, a turntable mounted on a vehicle chassis and positioned in a horizontal plane in close proximity to the axles of the vehicle. A parallelogram linkage including a pair of tubular arms is provided between a superstructure support frame carried by the turntable and a riser frame assembly to which one end of a telescopic boom assembly is pivotally connected, the aerial work platform being mounted on the outermost end of the telescopic boom assembly. A counterweight is detachably connected to the support frame and is formed with a trough aligned with a similar trough formed by closely spaced side walls on the superstructure support frame. The tubular arms extend through the troughs when the telescopic boom assembly is lowered to a negative angle for easy access to the work platform. When in this lowered position, for example, the height of the vehicle and associated linkage is approximately eight and a half feet for a machine that provides a work platform height of sixty feet thereby allowing the assembly to pass through nine foot doorways.

The support frame, tubular arms, riser frame assembly and pivotal connection of the telescopic boom to the riser frame assembly are constructed and arranged to be symmetrical with respect to the centerline of the machine whereby load stresses are equally distributed from the telescopic boom to the riser assembly through the tubular arms superstructure side walls and turntable to the chassis. When in the elevated position, the riser frame assembly, tubular arms, superstructure support frame and counterweight are positioned within the wheelbase of the vehicle, to thereby provide a zero tailswing; that is, no component extends beyond the wheels of the vehicle during the sluing of the superstructure and the telescopic boom assembly.

Brief Description of the Drawings-

Figure 1 is an elevational view of the vehicular low profile self propelled aerial work platform of the present invention showing the work platform in different working positions;

Figure 2 is a side elevational view of the vehicle of the present invention showing the telescopic boom assembly and associated work platform lowered to a negative angle to provide access to the platform;

Figure 3 is a fragmentary side elevational view showing the telescopic boom assembly moved to a raised position relative to the vehicle;

Figure 4 is a fragmentary rear elevational view taken substantially along line 4-4 of Figure 3; and

Figure 5 is a top plan view, partly in section, taken substantially along line 5-5 of Figure 3.

Description of the Preferred Embodiment-

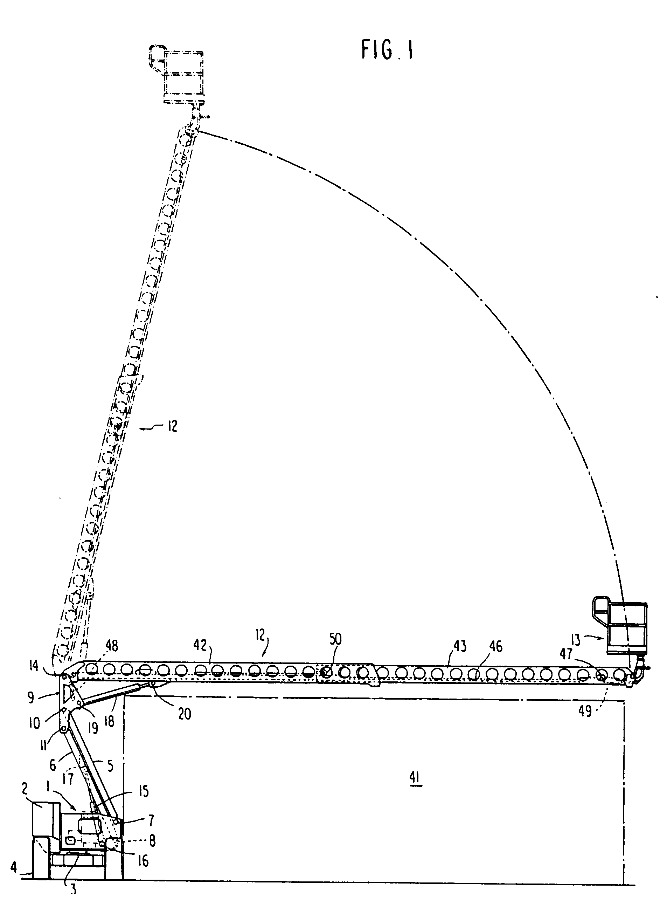

Referring to the drawings and more particularly to Figure 1, the vehicular low profile self propelled aerial work platform of the present invention comprises a superstructure support frame 1, having a counterweight 2, mounted on a turntable 3 carried by a vehicle chassis 4. A pair of substantially parallel tubular arms 5, 6 are each pivotally connected at one end to the support frame as at 7 and 8, and at the opposite end to a riser frame assembly 9, as at 10 and 11. A telescopic boom assembly 12, having a work platform 13 mounted on its outermost end, is pivotally connected to the riser frame assembly as at 14. A lower lift cylinder 15 is connected between the support frame 1 and the tubular arm 5 as at 16 and 17, respectively, whereby the tubular arms 5 and 6 and riser frame 9 may be raised and lowered with respect to the vehicle. A boom lift cylinder 18 is similarly connected between the riser frame assembly as at 19 and the base section of the telescopic boom assembly 12 as at 20, whereby the telescopic boom assembly can be raised and lowered with respect to the riser frame assembly 9, as shown in Figures 1, 2 and 3.

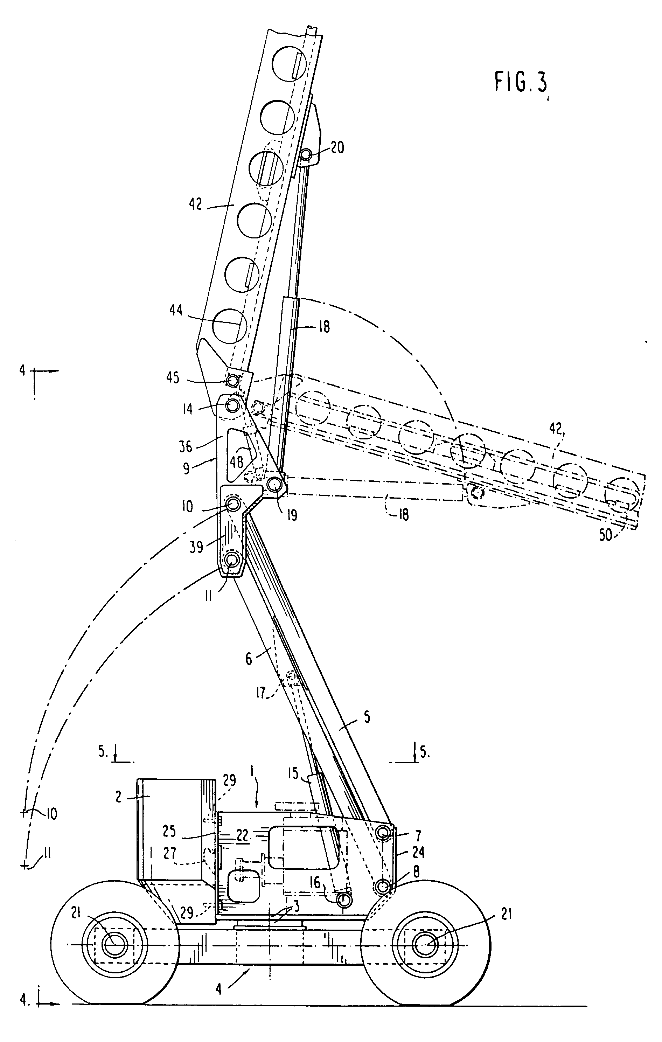

The details of the construction of the machine of the present invention are illustrated in Figures 3, 4 and 5 wherein it will be seen that, to obtain the low profile feature, the turntable 3 is positioned in a horizontal plane in close proximity to the plane of the vehicle axles 21. The superstructure support frame 1 comprises a pair of closely spaced side walls 22, 23 secured to the turntable 3 and having a front end wall 24 and a pair of outwardly extending transverse rear walls 25 and 26. The detachable counterweight 2 is hooked as at 27 and 28 to the rear walls 25 and 26 and bolted in place as at 29 and 30. The counterweight 2 is also provided with lift pins 31 whereby a crane can lift the weight for connecting it to the superstructure support frame.

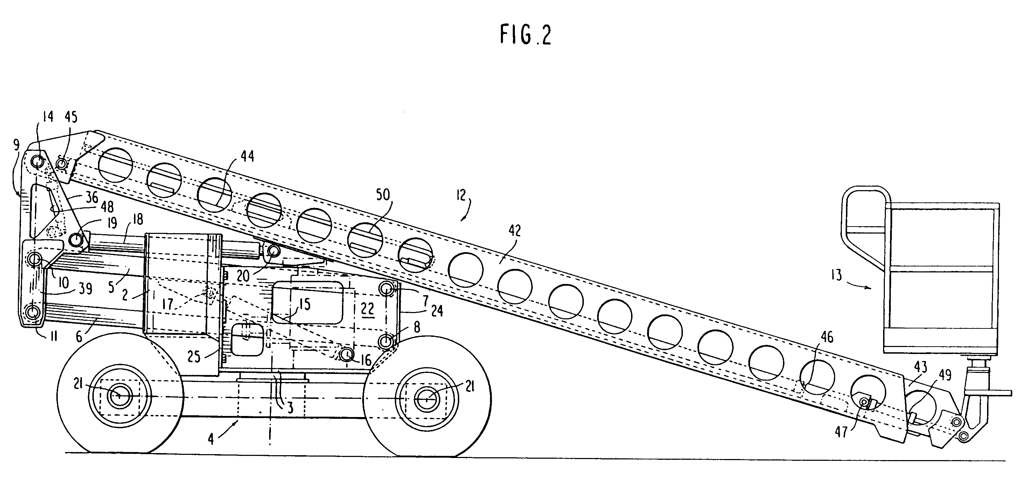

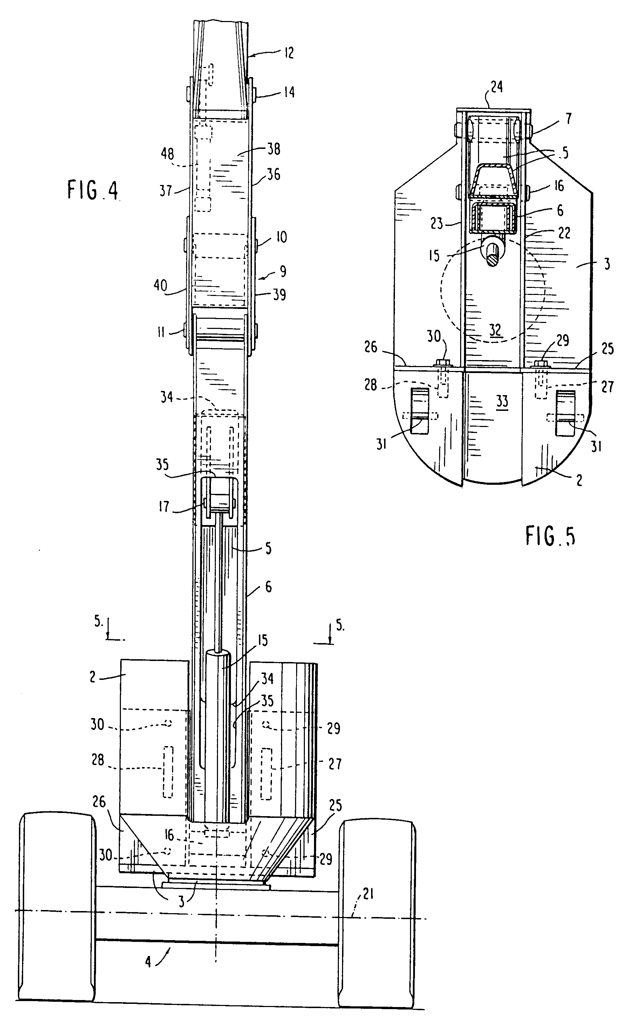

As will be seen in Figure 5, the parallel arms 5 and 6 are of tubular or box construction in cross section and are positioned in the space between the superstructure side walls 22 and 23, the pivotal connections 7 and 8 being vertically aligned as shown in Figure 3. The space between the side walls 22 and 23 provides a trough 32 aligned with the centerline of the vehicle chassis 4 and aligned with a similar trough 33 provided in the counterweight 2. By this construction and arrangement the parallel arms 5 and 6 are aligned with the centerline of the vehicle chassis and are received within the troughs when the machine is lowered, as shown in Figure 2. This arrangement also contributes to the low profile feature of the machine, which has a height of approximately eight and a half feet when positioned as shown in Figure 2. Machines with lower maximum work platform heights will have a lower overall height. While in the lowered position, as shown in Figure 2, the parallel arms 5 and 6 are slightly inclined in a direction toward the rear of the vehicle, although they are in substantially horizontal planes, and thus are initially oriented or positioned to move in a lifting mode as soon as the lift cylinder 15 is actuated as shown in Figure 3.

Since the arms 5 and 6 are of tubular construction, as will be seen in Figure 4, a portion of the top and bottom walls of lower arm 6 are cut-away to form openings 34 and 35, respectively, to accommodate the lift cylinder 15 and associated piston rod during the raising and lowering of the arms.

Referring to Figure 4, the riser frame assembly 9 is configured as a channel member having a pair of spaced, parallel side walls 36 and 37 interconnected by a web member 38. Reinforcing plates 39 and 40 are provided on the side walls 36 and 37 at the pivotal connections 10 and 11 of the arms 5 and 6. As will be shown in Figure 1, by the construction and arrangement of the lift arms 5 and 6 and riser frame assembly 9, the telescopic boom assembly 12 is provided with an elevated pivot connection 14, on the order of fifteen feet above the ground, so that the boom 12 can extend over an obstruction 41 when the boom is horizontally oriented. This type of machine is sometimes referred to as an up and over machine. The riser frame assembly 9 always remains vertically oriented in all positions of orientation of the machine. The elevated pivot connection 14 also allows for the telescopic boom assembly 12 and associated work platform 13 to be luffed and extended to a position shown in phantom in Figure 1, wherein the work platform 13 extends approximately sixty feet above the ground.

To complete the description of the vehicular, low profile, self propelled aerial work platform of the present invention, the telescopic boom assembly comprises a base section 42 and a telescopic boom section 43, the base section containing a fluid cylinder 44 fixed to the inner end of the base section as at 45 and having a piston rod 46 extending into the telescopic section 43 and fixed thereto as at 47. A master cylinder 48 is connected between the riser frame assembly 9 and the inner end of the base section 12, the master cylinder 48 being in fluid communication with a slave cylinder 49 mounted on the outer end of the telescopic boom section 43 and connected to the work platform 13 whereby the work platform 13 is maintained in a horizontal position during the luffing of the telescopic boom assembly 12, as well known in the art. The base boom section 42 also contains a carrier track assembly 50 for supporting various power cables and hoses extending through the telescopic boom assembly to the conventional controls mounted on the work platform 13, whereby the worker on the platform can control the maneuvering of the vehicle as well as the sluing and luffing of the telescopic boom assembly.

The structure is completely symmetrical since the telescopic boom assembly 12, boom lift cylinder 18, the pair of parallel arms 5 and 6 and the lower lift cylinder 15 are all positioned in the same vertical plane aligned with the centerline of rotation of turntable 3, and aligned with the centerline of the vehicle chassis in the lowered position of the machine, so that a load on the work platform 13 and the weight of machine components do not transmit any torque to the turntable, as is the case in most prior art machines of this same general type. The geometry of the positioning of the various structural elements in closely adjacent substantially horizontal planes relative to each other, and the vertical alignment of the pivot connections of the parallel arms 5 and 6 to the support frame, and the vertical alignment of the pivot connections of the parallel arms to the riser frame assembly 9, and vertical alignment with the pivot connection of the telescopic boom to the riser frame assembly are important aspects of the invention which provide the low profile capabilities of the machine in its retracted travel position.

The terms and expressions which have been employed herein are used as terms of description and not of limitation, and there is no intention, in the use of such terms and expressions, of excluding any equivalents of the features shown and described or portions thereof but it is recognized that various modifications are possible within the scope of the invention claimed.

## Claims

1. A vehicular low profile self propelled aerial work platform comprising a vehicle chassis (4), a turntable (3) mounted on said vehicle chassis (4) and positioned in a horizontal plane in close proximity to the axles (21) of the vehicle, a superstructure support frame (1) mounted on said turntable (3), a pair of substantially parallel arms (5, 6), each arm (5, 6) having one end pivotally connected (7, 8) to said superstructure support frame (1), a riser frame assembly (9), the opposite end of each arm (5, 6) being pivotally connected (10, 11) to said riser assembly (9), a first lift cylinder (15) having one end pivotally connected (16) to the superstructure support frame (1), the opposite end of said first lift cylinder (15) being operably connected (17) to one (5) of said arms, a telescopic boom assembly (12) and associated work platform (13) pivotally connected (14) to said riser assembly (9), a second lift cylinder (18) operatively connected (19, 20) between said riser frame assembly (9) and said telescopic boom assembly (12) for luffing said boom assembly (12), the superstructure support frame (1), parallel arms (5, 6) and riser frame assembly (9) providing a parallelogram linkage assembly, whereby upon actuation of said first lift cylinder (15) the parallel arms (5, 6) and riser frame assembly (9) are moved in a vertical plane, characterized by said superstructure support frame (1) including a pair of closely spaced side walls (22, 23), thereby defining two closely spaced planes, a counterweight (2) connected to one end of the superstructure support frame (1) and extending transversely to said closely spaced planes, a trough (33) formed in said counterweight (2), said trough (33) being aligned with and being an extension of the space (32) between said closely spaced planes, whereby the parallel arms (5, 6) extend between said closely spaced planes of the superstructure and the counterweight when the first and second (18) lift cylinders are retracted to move the riser frame assembly (9) and telescopic boom assembly (12) to the lowermost position wherein the boom assembly (12) is lowered to a negative angle and the first lift cylinder (15) is positioned in the space between said closely spaced planes, whereby the vehicle and associate boom assembly (12) can be easily maneuvered through low and narrow doorways and aisles in warehouses and manufacturing plants.

2. A vehicular low profile self propelled aerial work platform according to Claim 1, wherein the superstructure support frame (1), parallel arms (5, 6), riser frame assembly (9) and telescopic boom assembly (12) are constructed and arranged symmetrical with respect to the centerline of the machine, whereby load stresses are equally distributed from the telescopic boom (12) to the riser assembly (9) through the arms (5, 6) and superstructure side walls (22, 23),

3. A vehicular low profile self propelled aerial work platform according to Claim 1, wherein, when the machine is in the elevated position, the riser frame assembly (9), parallel arms (5, 6), superstructure support frame (1) and counterweight (2) are all positioned within the wheel base of the vehicle, to thereby provide a zero tailswing.

4. A vehicular low profile self propelled aerial work platform according to Claim 1, wherein the arms (5, 6) are of tubular construction and are disposed substantially in a vertical plane with respect to each other.

5. A vehicular low profile self propelled aerial work platform according to Claim 4, wherein the first lift cylinder (15) is operatively connected to the upper arm (5).

6. A vehicular low profile self propelled aerial work platform according to Claim 5, wherein portions of the top and bottom walls of the lower arm (6) are cut-away to provide openings (34, 35) to accommodate the first lift cylinder (15) during the raising and lowering of the arms (5, 6).

7. A vehicular low profile self propelled aerial work platform according to Claim 4, wherein the pivotal connection (7, 8) of the arms (5, 6) to the side walls (22, 23) of the superstructure support frame (1) are vertically aligned and positioned beneath said telescopic boom assembly (12) when in the negative angle position,

8. A vehicular low profile self propelled aerial work platform according to Claim 7, wherein the parallel arms (5, 6) are slightly inclined when in the lowered position to thereby be positioned in a lifting mode as soon as the first lift cylinder (15) is actuated.

9. A vehicular low profile self propelled aerial work platform according to Claim 1 wherein the arms (5, 6) and riser frame assembly (9) are constructed and arranged to provide an elevated pivot connection (14) for the telescopic boom assembly (12), whereby the boom pivot connection (14) extends approximately eight feet above the ground when the riser frame assembly (9) is lowered to move the boom assembly (12) to the negative angle position, and extends approximately fifteen feet above the ground when the riser frame assembly (9) is moved to the elevated position.

10. A vehicular low profile self propelled aerial work platform according to Claim 8, in which the parallel arms (5, 6) and telescopic boom assembly (12) are inclined in the same direction toward the front of the vehicle when said telescopic boom assembly (12) is in the negative angle position.

11. A vehicular low profile self propelled aerial work platform according to Claim 1, wherein said pair of parallel arms (5, 6), first lift cylinder (15), riser frame assembly (9), second lift cylinder (18), and telescopic boom assembly (12) are symmetrically positioned in a common vertical plane.

12. A vehicular low profile self propelled aerial work platform according to Claim 11, in which said telescopic boom assembly (12), said second lift cylinder (18) and said pair of parallel arms (5, 6) are respectively positioned one above the other when in the lowered position.

13. A vehicular low profile self propelled aerial work platform according to Claim 2, in which said turntable (3) having a centerline of rotation on said vehicle chassis (4), and the pivotal connections (7, 8) of the arms (5, 6) to the side walls (22, 23) of the superstructure support frame (1) being on the same side of the turntable center-line of rotation as the work platform (13) on the end of the telescopic boom assembly (12).

14. A vehicular low profile self propelled aerial work platform according to Claim 2, in which the pivotal connection (10, 11) of the arms (5, 6) to said riser frame assembly (9) are vertically aligned, and the pivot connection (14) of said telescopic boom assembly (12) to said riser assembly (9) being positioned above and vertically aligned with the pivotal connections (10, 11) of the arms (5, 6) to said riser frame assembly (9).

15. A vehicular low profile self propelled aerial work platform according to Claim 2 or 14, wherein said second lift cylinder (18) is pivotally connected (19) to said riser frame assembly (9) at a position between the pivotal connections (10, 11) of the arms (5, 6) and the pivot connection (14) of said telescopic boom assembly (12) to said riser assembly (9).

16. A vehicular low profile self propelled aerial work platform according to Claim 1, wherein the pair of substantially parallel arms (5, 6) are positioned in substantially horizontal planes above and in close proximity to the plane of said turntable (3), and said second lift cylinder (18) positioned in a substantially horizontal plane above and in close proximity to the horizontal planes of said arms (5, 6) in the retracted position of the machine with the telescopic boom assembly (12) in a negative angle position,

17. A vehicular low profile self propelled aerial work platform according to Claim 16, wherein the pivotal connection (14) of the telescopic boom assembly (12) to said riser frame assembly (9) is positioned above the pivotal connection (19) of said second lift cylinder (18) to said riser frame assembly (9), and in vertical alignment with the pivotal connections (10, 11) of the arms (5, 6) to said riser frame assembly (9).

**Revendications**

1. Plate-forme de travail en hauteur sur véhicule automoteur à profil bas comprenant un châssis de véhicule (4), un plateau tournant (3) monté sur ledit châssis de véhicule (4) et disposé dans un plan horizontal au voisinage immédiat des essieux (21) du véhicule, un châssis de support de superstructure (1) monté sur ledit plateau tournant (3), une paire de bras sensiblement parallèles (5, 6), chaque bras (5, 6) ayant une extrémité reliée de façon pivotante (7, 8) audit cadre de support de superstructure (1), un ensemble à cadre élévateur (9), l'extrémité opposée de chaque bras (5, 6) étant reliée de façon pivotante (10, 11) audit ensemble élévateur (9), un premier cylindre de soulèvement (15) ayant une extrémité reliée de façon pivotante (16) au cadre de support de superstructure (1), l'extrémité opposée dudit premier cylindre de soulèvement (15) étant reliée de façon fonctionnelle (17) à l'un (5) desdits bras, un ensemble à flèche télescopique (12) et une plate-forme de travail associée (13) reliés de façon pivotante (14) audit ensemble élévateur (9), un second cylindre de soulèvement (18) relié fonctionnellement (19, 20) entre ledit ensemble à cadre élévateur (9) et ledit ensemble à flèche télescopique (12) pour soulever ledit ensemble à flèche (12), le bras de support de superstructure (1), les bras parallèles (5, 6) et l'ensemble à cadre élévateur (9) formant un ensemble articulé en parallélogramme, de telle sorte que lors de l'actionnement dudit premier cylindre de soulèvement (15), les bras parallèles (5, 6) et l'ensemble à cadre élévateur (9) se déplacent dans un plan vertical, caractérisée par le fait que ledit cadre de support de superstructure (1) comporte une paire de parois latérales étroitement espacées (22, 23), définissant ainsi deux plans étroitement espacés, un contre-poids (2) relié à une extrémité du cadre de support de superstructure (1) et disposé transversalement par rapport auxdits plans étroitement espacés, un évidement (33) formé dans ledit contre-poids (2), ledit évidement (33) étant aligné avec et formant un prolongement de l'espace (32) entre lesdits plans étroitement espacés, de telle sorte que les bras parallèles (5, 6) se prolongent entre lesdits plans étroitement espacés de la superstructure et le contrepoids, lorsque les premier et second (18) cylindres de soulèvement sont rétractés pour déplacer l'ensemble à cadre élévateur (9) et l'ensemble à flèche télescopique (12) jusqu'à la position la plus basse à laquelle l'ensemble à flèche (12) est abaissé à un angle négatif et le premier cylindre de soulèvement (15) est placé dans l'espace séparant lesdits plans étroitement espacés, de telle sorte que le véhicule et l'ensemble à flèche associé (12) puissent être manoeuvrés aisément au travers de portes et d'allées étroites et basses dans des entrepôts et des installations de fabrication.

2. Plate-forme de travail en hauteur sur véhicule automoteur à profil bas selon la revendication 1, dans laquelle le cadre de support de superstructure (1), les bras parallèles (5, 6), l'ensemble à cadre élévateur (9) et l'ensemble à flèche télescopique (12) sont réalisés et agencés symétriquement par rapport à l'axe central de la machine, de telle sorte que les contraintes de charge soient également réparties entre la flèche télescopique (12) et l'ensemble élévateur (9), par l'intermédiaire des bras (5, 6) et des parois latérales (22, 23) de la superstructure.

3. Plate-forme de travail en hauteur sur véhicule automoteur à profil bas selon la revendication 1, dans laquelle, lorsque la machine est en position surélevée, l'ensemble à cadre élévateur (9), les bras parallèles (5, 6), le cadre de support de superstructure (1) et le contre-poids (2) sont tous disposés à l'intérieur de l'empâtement du véhicule, ce qui assure un balancement nul de l'arrière du véhicule.

4. Plate-forme de travail en hauteur sur véhicule automoteur à profil bas selon la revendication 1, dans laquelle les bras (5, 6) sont de structure tubulaire et sont disposés sensiblement dans un plan vertical l'un par rapport à l'autre.

5. Plate-forme de travail en hauteur sur véhicule automoteur à profil bas selon la revendication 4, dans laquelle le premier cylindre de soulèvement (15) est relié fonctionnellement au bras supérieur (5).

6. Plate-forme de travail en hauteur sur véhicule automoteur à profil bas selon la revendication 5, dans laquelle des parties des parois supérieure et inférieure du bras inférieur (6) sont découpées de façon à former des ouvertures (34, 35) pour loger le premier cylindre de soulèvement (15) lors de l'élévation et de l'abaissement des bras (5, 6).

7. Plate-forme de travail en hauteur sur véhicule automoteur à profil bas selon la revendication 4, dans laquelle le raccord pivotant (7, 8) des bras (5, 6) des parois latérales (22, 23) du cadre de support de superstructure (1) sont verticalement alignés, et positionnés sous ledit ensemble à flèche télescopique (12) lorsqu'elle est dans la position angulaire négative.

8. Plate-forme de travail en hauteur sur véhicule automoteur à profil bas selon la revendication 7, dans laquelle les bras parallèles (5, 6) sont légèrement inclinés lorsqu'ils sont en position abaissée afin d'être positionnés dans un mode de soulèvement dès que le premier cylindre de soulèvement (15) est actionné.

9. Plate-forme de travail en hauteur sur véhicule automoteur à profil bas selon la revendication 1, dans laquelle les bras (5, 6) et l'ensemble à cadre élévateur (9) sont réalisés et agencés pour former un raccord pivotant surélevé (14) pour l'ensemble à flèche télescopique (12), ce par quoi le raccord pivotant de flèche (14) se situe à environ 2,4 mètres au-dessus du sol lorsque l'ensemble à cadre élévateur (9) est abaissé pour amener l'ensemble à flèche (12) à la position angulaire négative, et se situe à environ 4,5 mètres audessus du sol lorsque l'ensemble à cadre élévateur (9) est amené à la position surélevée.

10. Plate-forme de travail en hauteur sur véhicule automoteur à profil bas selon la revendication 8, dans laquelle les bras parallèles (5, 6) et l'ensemble à flèche télescopique (12) sont inclinés dans la même direction, vers l'avant du véhicule, lorsque ledit ensemble à flèche télescopique (12) se trouve dans la position angulaire négative.

11. Plate-forme de travail en hauteur sur véhicule automoteur à profil bas selon la revendication 1, dans laquelle la paire de bras parallèles (5, 6), le premier cylindre de soulèvement (15), l'ensemble à cadre élévateur (9), le second cylindre de soulèvement (18), et l'ensemble à flèche télescopique (12) sont positionnés symétriquement dans un plan vertical commun.

12. Plate-forme de travail en hauteur sur véhicule automoteur à profil bas selon la revendication 11, dans laquelle ledit ensemble flèche télescopique (12), ledit second cylindre de soulèvement (18) et ladite paire de bras parallèles (5, 6) sont respectivement positionnés l'un au-dessus de l'autre lorsqu'ils sont en position abaissée.

13. Plate-forme de travail en hauteur sur véhicule automoteur à profil bas selon la revendication 2, dans laquelle ledit plateau tournant (3) présente un axe central de rotation sur ledit châssis de véhicule (4), et les raccords pivotants (7, 8) des bras (5, 6) sur les parois latérales (22, 23) du cadre de support de superstructure (1), se trouvent du même côté de l'axe de rotation du plateau tournant que la plate-forme de travail (13), à l'extrémité de l'ensemble à flèche télescopique (12).

14. Plate-forme de travail en hauteur sur véhicule automoteur à profit bas selon la revendication 2, dans laquelle les raccords pivotant (10, 11) des bras (5, 6) sur ledit ensemble à cadre élévateur (9) sont verticalement alignés, et dans lequel le raccord pivotant (14) dudit ensemble à flèche télescopique (12) sur ledit ensemble élévateur (9) est positionné audessus des raccords pivotants (10, 11) des bras (5, 6) sur ledit ensemble à cadre élévateur (9), et aligné avec ceux-ci.

15. Plate-forme de travail en hauteur sur véhicule automoteur à profil bas selon la revendication 2 ou 14, dans laquelle ledit second cylindre de soulèvement (18) est raccordé de façon pivotante (19) audit ensemble à cadre élévateur (9) en une position située entre les raccords pivotants (10, 11) des bras (5, 6) et le raccord pivotant (14) dudit ensemble à flèche télescopique (12) sur ledit ensemble élévateur (9).

16. Plate-forme de travail en hauteur sur véhicule automoteur à profil bas selon la revendication 1, dans laquelle les deux bras sensiblement parallèles (5, 6) sont positionnés dans des plans sensiblement horizontaux au-dessus et au voisinage immédiat du plan dudit plateau tournant (3), et dans laquelle ledit second cylindre de soulèvement (18) est disposé dans un plan sensiblement horizontal au-dessus et à proximité immédiate des plans horizontaux desdits bras (5, 6) lorsque la machine est en position rétractée et lorsque l'ensemble à flèche télescopique (12) est en position angulaire négative.

17. Plate-forme de travail en hauteur sur véhicule automoteur à profil bas selon la revendication 16, dans laquelle le raccord pivotant (14) de l'ensemble à flèche télescopique (12) sur ledit ensemble à cadre élévateur (9) est positionné au-dessus du raccord pivotant (19) dudit second cylindre de soulèvement (18) sur ledit ensemble à cadre élévateur (9) et se trouve en alignement vertical avec les raccords pivotants (10, 11) des bras (5, 6) sur ledit ensemble à cadre élévateur (9).

**Patentansprüche**

1. Fahrbare, selbstangetriebene schwebende Arbeitsplattform mit niedrigem Profil, umfassend ein Fahrzeugchassis (4), ein Drehgestell (3), welches auf dem genannten Fahrzeugchassis (4) angebracht und in einer horizontalen Ebene in enger Nachbarschaft zu den Achsen (21) des Fahrzeugs positioniert ist, einen auf dem genannten Drehgestell (3) angeordneten Ueberbaustützrahmen (1), ein Paar von im wesentlichen parallelen Armen (5, 6), wobei jeder Arm (5, 6) mit einem Ende drehbar (7, 8) mit dem genannten Ueberbaustützrahmen (1) verbunden ist, eine Zwischenrahmenanordnung (9), an welcher je das entgegengesetzte Ende eines jeden Arms (S, 6) drehbar (10, 11) angebracht ist, einen ersten Hubzylinder (15), dessen eines Ende drehbar (16) mit dem Ueberbaustützrahmen (1) und dessen anderes Ende beweglich (17) mit einem (5) der genannten Arme verbunden ist, eine teleskopische Auslegervorrichtung (12) mit dazugehöriger Arbeitsplattform (13), welche drehbar (14) mit der genannten Zwischenrahmenanordnung (9) verbunden ist, einen zweiten Hubzylinder (18), welcher beweglich (19, 20) zwischen der genannten Zwischenrahmenanordnung (9) und der genannten teleskopischen Auslegervorrichtung (12) vorgesehen ist zwecks Hochschwenken der genannten Auslegervorrichtung (12), wobei der Ueberbaustützrahmen (1), die parallelen Arme (5, 6) und die Zwischenrahmenanordnung (9) eine Parallelogrammgelenkrahmenanordnung bilden, wobei bei der Betätigung des genannten ersten Hubzylinders (15) die parallelen Arme (5, 6) und die Zwischenrahmenanordnung (9) in einer vertikalen Ebene bewegt werden, dadurch gekennzeichnet, dass der Ueberbaustützrahmen (1) ein Paar eng beabstandeter seitlicher Wände (22, 23) aufweist, wodurch zwei eng beabstandete Ebenen definiert werden, dass ein Gegengewicht (2) an einem Ende des Ueberbaustützrahmens (1) befestigt ist und sich quer zu den genannten eng beabstandeten Ebenen erstreckt, dass ein im Gegengewicht (2) gebildeter kanalartiger Leerraum (33) vorhanden ist, welcher ausgerichtet ist mit und eine Verlängerung ist von dem Raum (32) zwischen den genannten eng beabstandeten Ebenen, wobei die parallelen Arme (5, 6) sich zwischen den genannten eng beabstandeten Ebenen des Ueberbaus und des Gegengewichts erstrecken, wenn der erste und zweite (18) Hubzylinder zurückgezogen sind, um die Zwischenrahmenanordnung (9) und die teleskopische Auslegervorrichtung (12) in die tiefste Position zu bewegen, in welcher die Auslegervorrichtung (12) zu einem negativen Winkel abgesenkt ist und der erste Hubzylinder (15) im Raum zwischen den genannten eng beabstandeten Ebenen positioniert ist, wobei das Fahrzeug mit der dazugehörigen Auslegervorrichtung (12) einfach durch niedrige und enge Türöffnungen und Gänge in Warenhäusern und Fabrikationsgebäuden manövriert werden kann.

2. Arbeitsplattform nach Anspruch 1, dadurch gekennzeichnet, dass der Ueberbaustützrahmen (1), die parallelen Arme (5, 6), die Zwischenrahmenanordnung (9) und die teleskopische Auslegervorrichtung (12) symmetrisch bezüglich der Mittellinie der Maschine konstruiert und angeordnet sind, so dass durch Last hervorgerufene Spannungen gleichmässig vom teleskopischen Ausleger (12) zur Zwischenrahmenanordnung (9) durch die Arme (5, 6) und die seitlichen Wände (22, 23) des Ueberbaus verteilt werden.

3. Arbeitsplattform nach Anspruch 1, dadurch gekennzeichnet, dass, wenn die Maschine in der angehobenen Position ist, die Zwischenrahmenanordnung (9), die parallelen Arme (5, 6), der Ueberbaustützrahmen (1) und das Gegengewicht (2) alle innerhalb des Radstandes des Fahrzeuges positioniert sind, um so frei von einer rückseitigen Ausladung beim Schwenken zu sein.

4. Arbeitsplattform nach Anspruch 1, dadurch gekennzeichnet, dass die Arme (5, 6) rohrförmig ausgebildet und im wesentlichen in einer vertikalen Ebene in bezug aufeinander angeordnet sind.

5. Arbeitsplattform nach Anspruch 4, dadurch gekennzeichnet, dass der erste Hubzylinder (15) beweglich mit dem oberen Arm (5) verbunden ist.

6. Arbeitsplattform nach Anspruch 5, dadurch gekennzeichnet, dass die oberen und unteren Wände des unteren Arms (6) ausgeschnitten sind, um Oeffnungen (34, 35) zu bilden zur Aufnahme des ersten Hubzylinders (15) während des Anhebens und Absenkens der Arme (5, 6).

7. Arbeitsplattform nach Anspruch 4, dadurch gekennzeichnet, dass die drehbaren Verbindungen (7, 8) der Arme (5, 6) mit den seitlichen Wänden (22, 23) des Ueberbaustützrahmens (1) vertikal ausgerichtet und neben der genannten teleskopischen Auslegervorrichtung (12) positioniert sind, wenn die Arme in eine Position mit negativem Winkel abgesenkt sind.

8. Arbeitsplattform nach Anspruch 7, dadurch gekennzeichnet, dass die parallelen Arme (5, 6) in der abgesenkten Position leicht geneigt sind, um dadurch in einen anhebenden Zustand positioniert zu werden, sobald der erste Hubzylinder (15) betätigt wird.

9. Arbeitsplattform nach Anspruch 1, dadurch gekennzeichnet, dass die Arme (5, 6) und die Zwischenrahmenanordnung (9) so konstruiert und angeordnet sind, dass sie eine erhöhte Drehverbindung (14) für die teleskopische Auslegervorrichtung (12) bilden, wobei die genannte Drehverbindung (14) des Auslegers näherungsweise 2,5 Meter über dem Boden ist, wenn die Zwischenrahmenanordnung (9) abgesenkt ist, um die Auslegervorrichtung (12) in eine negative Winkelposition zu bewegen, und sich näherungsweise in eine Höhe von 4,5 Metern über dem Boden erhebt, wenn die Zwischenrahmenanordnung (9) in eine angehobene Position bewegt worden ist.

10. Arbeitsplattform nach Anspruch 8, dadurch gekennzeichnet, dass die parallelen Arme (5, 6) und die teleskopische Auslegervorrichtung (12) in dieselbe Richtung gegen die Vorderseite des Fahrzeugs geneigt sind, wenn die genannte teleskopische Auslegervorrichtung (12) in einer Position mit negativem Winkel ist.

11. Arbeitsplattform nach Anspruch 1, dadurch gekennzeichnet, dass das genannte Paar paralleler Arme (5, 6), der erste Hubzylinder (15), die Zwischenrahmenanordnung (9), der zweite Hubzylinder (18) und die teleskopische Auslegervorrichtung (12) in einer gemeinsamen vertikalen Ebene symmetrisch positioniert sind.

12. Arbeitsplattform nach Anspruch 11, dadurch gekennzeichnet, dass die genannte teleskopische Auslegervorrichtung (12) der genannte zweite Hubzylinder (18) und das genannte Paar paralleler Arme (5, 6) je übereinander positioniert sind in der abgesenkten Position.

13. Arbeitsplattform nach Anspruch 2, dadurch gekennzeichnet, dass das genannte Drehgestell (3), welches eine Rotationsmittellinie auf dem genannten Fahrzeugchassis (4) aufweist, und die drehbaren Befestigungen (7, 8) der Arme (5, 6) an den seitlichen Wänden (22, 23) des Ueberbaustützrahmens (1) auf derselben Seite der Rotationsmittellinie des Drehgestells angeordnet sind, wie die Arbeitsplattform (13) am Ende der teleskopischen Auslegervorrichtung (12).

14. Arbeitsplattform nach Anspruch 2, dadurch gekennzeichnet, dass die drehbaren Verbindungen (10, 11) der Arme (5, 6) mit der Zwischenrahmenanordnung (9) vertikal ausgerichtet sind und dass die drehbare Verbindung (14) der genannten teleskopischen Auslegervorrichtung (12) mit der genannten Zwischenrahmenanordnung (9) über und vertikal ausgerichtet positioniert ist mit den drehbaren Verbindungen (10, 11) der Arme (5, 6) mit der Zwischenrahmenanordnung (9).

15. Arbeitsplattform nach einem der Ansprüche 2 oder 14, dadurch gekennzeichnet, dass der genannte zweite Hubzylinder (18) drehbar (19) verbunden ist mit der genannten Zwischenrahmenanordnung (9) in einer Position zwischen den drehbaren Verbindungen (10, 11) der Arme (5, 6) und der drehbaren Verbindung (14) der genannten teleskopischen Auslegervorrichtung (12) mit der genannten Zwischenrahmenanordnung (9).

16. Arbeitsplattform nach Anspruch 1, dadurch gekennzeichnet, dass das Paar der im wesentlichen parallelen Arme (5, 6) in Ebenen positioniert sind, die im wesentlichen horizontal und in enger Nachbarschaft zu der Ebene des genannten Drehgestells (3) sind, und dass der genannte zweite Hubzylinder (18) in einer im wesentlichen horizontalen Ebene über und in enger Nachbarschaft zu den horizontalen Ebenen der genannten Arme (5, 6) positioniert sind, wenn die Maschine in zusammengezogener Position und die teleskopische Auslegervorrichtung (12) in einer negativen Winkelposition sind.

17. Arbeitsplattform nach Anspruch 16, dadurch gekennzeichnet, dass die drehbare Verbindung (14) der teleskopischen Auslegervorrichtung (12) mit der genannten Zwischenrahmenanordnung (9) über der drehbaren Verbindung (19) des genannten zweiten Hubzylinders (18) mit der genannten Zwischenrahmenanordnung (9) positioniert ist und in vertikaler Ausrichtung mit den drehbaren Verbindungen (10, 11) der Arme (5, 6) mit der Zwischenrahmenanordnung (9) steht.

FIG. 1

FIG.2

FIG. 3

FIG.4

FIG.5